(19) Europäisches Patentamt
European Patent Office
Office européen des brevets

(11) EP 0 651 182 B1

## (12) EUROPÄISCHE PATENTSCHRIFT

(45) Veröffentlichungstag und Bekanntmachung des Hinweises auf die Patenterteilung:
**04.03.1998 Patentblatt 1998/10**

(51) Int Cl.⁶: **F16H 61/14**, F16D 48/06

(21) Anmeldenummer: **94116276.0**

(22) Anmeldetag: **15.10.1994**

(54) **Verfahren zum Steuern einer die Drehzahldifferenz einer Kupplung eines Kraftfahrzeuges bestimmenden Stellgrösse**

Method for controlling a variable determining the difference in rotating speed of a motor vehicle clutch

Procédé de commande d'une variable de réglage, déterminant la différence de vitesse de rotation d'un embrayage d'automobile

(84) Benannte Vertragsstaaten:
**BE DE FR GB SE**

(30) Priorität: **29.10.1993 DE 4337021**

(43) Veröffentlichungstag der Anmeldung:
**03.05.1995 Patentblatt 1995/18**

(73) Patentinhaber: **DAIMLER-BENZ AKTIENGESELLSCHAFT**
**70567 Stuttgart (DE)**

(72) Erfinder:
- **Wagner, Gerhard, Dr.-Ing.**
  **D-71686 Remseck (DE)**
- **Hein, Lothar, Dr.-Ing.**
  **D-70736 Fellbach (DE)**

(56) Entgegenhaltungen:
**WO-A-90/01431          FR-A- 2 635 585**

## Beschreibung

Die Erfindung bezieht sich auf ein Verfahren nach dem Oberbegriff von Patentanspruch 1.

Bei einem bekannten Verfahren der eingangs genannten Art (EP 0 426 745 B1) zur Steuerung einer Kupplung, die zwischen einem Antriebsmotor und einem Gangschaltgetriebe eines Kraftfahrzeuges angeordnet und als Überbrückungskupplung einer hydrodynamischen Einheit bzw. als Trennkupplung ausgebildet ist, sind Einrichtungen zur Ermittlung der Motor- und der Getriebeabtriebsdrehzahl sowie eine Schlupfregelschalteinrichtung vorgesehen, die den Druck für einen Stellantrieb der Kupplung bzw. Überbrückungskupplung bestimmt, wobei aus dem Vergleich von vorgegebenen Schlupf-Sollwerten und den aus den Drehzahlen ermittelten Schlupf-Istwerten die Regelabweichung ermittelt und nach einem vorgegebenen Regelalgorithmus in Drücke umgesetzt wird. Da üblicherweise bei Getriebesteuerungen, insbesondere an Pkw-Automatgetrieben, die mit der Kupplungsabtriebsdrehzahl übereinstimmende Getriebeeingangsdrehzahl nicht direkt bekannt ist, weil keine geeigneten Sensoren an der Abtriebswelle der Kupplung oder bei Automatgetrieben an der Turbinenwelle des hydrodynamischen Drehmomentwandlers angeordnet sind, wird bei dem bekannten Verfahren angestrebt, daß auch ohne Kenntnis der Kupplungsabtriebsdrehzahl eine gute Schaltqualität ohne Komforteinbußen bzw. ohne Durchdrehen des Motors bei den Gangschaltungen des Gangschaltgetriebes erreicht wird. Zu diesem Zweck ist bei dem bekannten Verfahren vorgesehen, daß die für die Schlupfermittlung notwendige Kupplungsabtriebsdrehzahl über eine Gangübersetzung des Gangschaltgetriebes und dessen Getriebeabtriebsdrehzahl ermittelt wird und während eines Schaltvorganges ohne feste Gangübersetzung eine Ansteuerung des Stellantriebes der Kupplung mit einer Zeitspanne als Totzeit erfolgt, in der der Druck soweit abgesenkt wird, bis sich ein vorbestimmter Schlupf ergibt, und daß in dem anschließenden zweiten Zeitintervall bis zum Zeitpunkt des neu eingelegten Ganges der Druck für den Stellantrieb der Kupplung konstant gehalten oder zeitlich gesteuert variiert wird. Bei diesem bekannten Verfahren ist somit der instationäre Kupplungszustand durch den Schaltungsbeginn und durch das Schaltungsende einer Gangschaltung des Gangschaltgetriebes festgelegt, während die Phase mit von einer Zeitfunktion bestimmtem Verlauf des Druckes für den Stellantrieb der Kupplung lediglich wahlweise vorgesehen und in bezug auf den Phasenbeginn durch einen vorbestimmten Schlupfwert der Kupplung sowie in bezug auf das Phasenende durch das Schaltungsende der Gangschaltung im Gangschaltgetriebe festgelegt ist.

Aus der DE 3640139 C2 ist ein gattungfremdes Verfahren zur Steuerung einer Kupplung in einem Flüssigkeits-Drehmomentwandler eines Fahrzeuggetriebes bekannt, das mit einem eine Drosselklappe aufweisenden Motor verbunden ist, wobei die Kupplung unter bestimmten Bedingungen zur mechanischen Verbindung der Eingangs- und der Ausgangsseite des Flüssigkeits-Drehmomentwandlers dient und in einem vorgegebenen Fahrzeuggeschwindigkeitsbereich durch eine solche relativ kleine Eingriffskraft betätigt wird, daß ein Kupplungsschleifen möglich ist. Bei diesem bekannten Verfahren ist im Gegensatz zu der bekannten gattungsgemäßen Anordnung weder eine Einrichtung zur Erfassung einer von der Geschwindigkeit des Fahrpedales abhängigen Einflußgröße verwendet noch eine Phase mit einem von einer vorgegebenen Zeitfunktion bestimmten Verlauf der Stellgröße einsteuerbar. Diesem bekannten Verfahren liegt auch ein anderer technischer Hintergrund zugrunde, wonach bekannte Kupplungssysteme mit dem Problem behaftet seien, daß aufgrund des Schleifens der Kupplung kein ausreichender Bremseffekt durch den Motor erreicht wird, wenn das Gaspedal zur Verlangsamung losgelassen wird, während das Fahrzeug in einem vorgegebenen Geschwindigkeitsbereich fährt, in dem die Kupplung normalerweise im schleifenden Zustand betätigt wird. Zwar gewährleistet die Realisierung einer Steuerung im Sinne einer direkten Verbindung des Einganges und des Ausganges des Drehmomentwandlers durch die Kupplung bei Verlangsamung den gewünschten Bremseffekt; bei bestimmten Betriebsbedingungen könnten dabei jedoch andere Probleme hervorgerufen werden. Um derartige Probleme nicht entstehen zu lassen, ist das bekannte Verfahren dieser Druckschrift dadurch gekennzeichnet, daß bestimmt wird, wann die Drosselklappe einen Öffnungsbetrag unterhalb eines vorgegebenen Referenzwertes besitzt und die Fahrzeuggeschwindigkeit in den vorgegebenen Bereich fällt, und daß die Eingriffskraft der Kupplung über den Wert erhöht wird, der normalerweise bei dem vorgegebenen Referenz-Drosselklappen-Öffnungsbetrag vorhanden ist. Bei diesem bekannten Verfahren kann, wenn das Fahrpedal zur Verlangsamung losgelassen wird, die Eingriffskraft der Kupplung abrupt vergrößert werden, um ein Schleifen zu reduzieren oder zu vermindern, weil die Drosselklappenöffnung unter den vorgegebenen Wert fällt, wodurch in gewünschter Weise ein Bremseffekt durch den Motor hervorgerufen wird.

Aus der PCT/WO 89/03318 A1 ist eine gattungsfremde Anordnung zur Steuerung einer Kupplung bekannt, welche im Kraftfluß zwischen einem Antriebsmotor und einem Gangwechselgetriebe eines Kraftfahrzeuges liegt. Bei dieser bekannten Anordnung wird die Übertragungsfähigkeit der Kupplung selbsttätig in Abhängigkeit vom Öffnungsgrad (Drosselklappenwinkel) der Drosselklappe oder in Abhängigkeit von der Stellung des Fahrpedales im wesentlichen so gesteuert, daß die Übertragungsfähigkeit der jeweiligen Drehmomentanforderung angepaßt wird - einer hohen Drehmomentanforderung also eine hohe Übertragungsfähigkeit, einer niedrigeren Drehmomentanforderung eine entsprechend niedrigere Übertragungsfähigkeit zugeordnet ist. Bei dieser bekannten Anordnung wird angestrebt, daß bei einer plötzlichen Erhöhung der Drehmomentanforderung unter tip-in-Bedingungen, d. h. bei einem Wechsel aus einem momentanen Schubbetrieb, in welchem der Antriebsmotor vom Fahrzeug angetrieben ist und naturgemäß der Öffnungsgrad der Drosselklappe und somit die Übertragungsfähigkeit der Kupplung niedrig sind, in den Zugbetrieb, in welchem der Antriebsmotor das Fahrzeug antreibt, das Auftreten von Drehmomentstößen und -schwingungen im Antriebsstrang nach der Kupplung zu vermeiden Zu diesem Zweck wird bei der bekannten Anordnung in diesem Falle, also bei kleiner Drosselklappenöffnung, die Übertragungsfähigkeit nur so weit erhöht, daß die Kupplung über eine kurze Zeitspanne mit Schlupf arbeitet. Nur wenn hierbei die Drosselklappenöffnung sehr klein und die Geschwindigkeit der Drosselklappe oder des Fahrpedales sehr hoch ist, wird eine Phase mit einem durch eine vorgegebene Zeitfunktion bestimmten fallenden Verlauf der Übertragungsfähigkeit durch die Steuerung ausgelöst, welche jedoch zeitlich vor dem angestrebten, durch Schlupf gekennzeichneten instationären Kupplungszustand liegt. Bei dieser bekannten Anordnung ist der Verlauf der Übertragungsfähigkeit in der besagten Phase auch bei verschiedenen Drosselklappenöffnungen und auch bei verschiedenen Geschwindigkeiten der Drosselklappe bzw. des Fahrpedales sowohl in bezug auf den Steigungswinkel als auch in bezug auf die zeitliche Dauer stets gleich.

Weiterhin ist aus der DE 3636952 C2 eine Kupplungssteuereinrichtung für ein Kraftfahrzeug bekannt, die mit einem Gaspedalgeber und mit einer von dem Gaspedalgeber angesteuerten Kennlinien-Wandlereinrichtung arbeitet. Bei dieser Kupplungssteuereinrichtung, bei welcher im Gegensatz zu der gattungsgemäßen Anordnung zum Steuern einer die Drehzahldifferenz der Kupplung bestimmenden Stellgröße weder eine Einrichtung zur Erfassung einer von der Temperatur der Kupplung abhängigen Einflußgröße verwendet noch eine Phase mit einem von einer vorgegebenen Zeitfunktion bestimmten Verlauf der Stellgröße einsteuerbar ist, soll die Möglichkeit geboten sein, abhängig vom Fahrzustand bzw. Nichtfahrzustand des betreffenden Fahrzeuges und abhängig von der Gaspedalstellung den Einkuppelvorgang zu steuern. Zu diesem Zweck ist diese bekannte Kupplungssteuervorrichtung dadurch gekennzeichnet, daß der Gaspedalgeber einen ersten Geber zum Erzeugen eines ersten die Gaspedalstellung angebenden Signals und einen zweiten Geber zum Erzeugen eines die Betätigungsgeschwindigkeit des Gaspedals angebenden zweiten Signals aufweist, die Kennlinien-Wandlereinrichtung eine erste Abgabeeinrichtung, die auf das erste Signal anspricht, um ein erstes Betätigungssignal zu erzeugen, um das vollständige Einkuppeln der Kupplungseinrichtung entsprechend dem Betätigungsgrad des Gaspedales durchzuführen; und eine zweite Abgabeeinrichtung aufweist, welche auf das erste und das zweite Signal anspricht, um ein zweites Betätigungssteuersignal zu erzeugen, um die Kupplungseinrichtung in einem halb eingekuppelten Zustand in Relation zu dem Betätigungsgrad der Gaspedals zu betätigen, und eine dritte Einrichtung aufweist, welche das erste und das zweite Betätigungssteuersignal empfängt, um wahlweise der Kupplung in Abhängigkeit vom Vorliegen mehrerer vorgegebener Bedingungen entweder das erste oder das zweite Betätigungssteuersignal entsprechend dem Betätigungsgrad und der Betätigungsgeschwindigkeit des Gaspedals zuzuführen. Aufgrund dieser Ausgestaltung soll die bekannte Kupplungssteuereinrichtung im Stande sein, jedem beliebigen Fahrzustand des Fahrzeuges Rechnung zu tragen, d. h. der Einkupplungs-vorgang soll optimal abhängig von dem jeweiligen Fahrzustand des Fahrzeuges bzw. abhängig vom Stillstand des Fahrzeuges und abhängig vom Fahrzustand des Fahrzeuges durchgeführt werden.

Schließlich ist durch die DE 4100091 Al eine Anordnung zur Überwachung einer Reibungskupplung, insbesondere einer automatisierten Reibungskupplung eines Kraftfahrzeuges bekannt. Diese Anordnung umfaßt eine Drehmoment-Ermittlungseinrichtung zur Ermittlung von Daten, die das an der Kupplung auftretende momentane Drehmoment zumindestens näherungsweise repräsentieren, Drehzahlsensoren, die der momentanen Drehzahl und der momentanen Ausgangsdrehzahl entsprechende Daten liefern, eine Recheneinrichtung, die abhängig von den Daten der Drehmomenteinrichtung und der Drehzahlsensoren mit einer vorbestimmten Zeitperiode aufeinanderfolgend Daten errechnet, die zumindestens näherungsweise die momentane Reibleistung der Kupplung repräsentieren, und die die Reibleistungsdaten zur Ermittlung mehrerer Reibarbeitsmittelwerte über mehrere Zeitintervalle unterschiedlicher Dauer hinweg summiert, wobei die Recheneinrichtung die in den einzelnen Zeitintervallen ermittelnden Reibarbeitsmittelwerte mit den Zeitintervallen hinzugeordneten, vorgegebenen Grenzwerten vergleicht und bei Überschreitung der einzelnen Grenzwerte den Grenzwerten zugeordnete Überschreitungssignale erzeugt. Damit sowohl eine momentane Spitzenbelastung als auch die Dauerbelastung der Kupplung mit hoher Genauigkeit überwacht werden kann, sind bei dieser bekannten Anordnung Maßnahmen dahingehend getroffen, daß ein die Temperaturen eines Bauteils der Kupplung erfassender Temperatursensor vorgesehen ist, daß den einzelnen Reibarbeitsmittelwerten jeweils mehrere Grenzwerte zugeordnet sind, deren Größe eine Funktion der Kupplungstemperatur ist, und daß die Recheneinrichtung die Überschreitungssignale abhängig von der erfaßten Kupplungstemperatur und den für die erfaßte Kupplungstemperatur vorgegebenen Größen der Grenzwerte erzeugt.

Zur Verringerung des Energieverbrauches von Kraftfahrzeugen mit Automatikgetrieben werden Kupplungen zur Überbrückung des hydrodynamischen Drehmomentwandlers verwendet, welche bei bestimmten Gangschaltungen im Automatgetriebe ausgerückt sein müssen und mit einem mechanischen Torsionsfederdämpfer im Kraftfluß in Reihe angeordnet sein können, um von der Brennkraftmaschine herrührende Drehmomentschwingungen von dem nachgeordneten Kraftübertragungsstrang fernzuhalten. Zu dem letztgenannten Zweck ist es auch bekannt, solche Kupplungen entweder in Ergänzung oder als Ersatz eines Torsionsdämpfers mit einem bestimmten Schlupf arbeiten zu lassen, um die Drehmomentschwingungen von der Sekundärseite der Kupplung abzukoppeln.

Die der Erfindung zugrunde liegende Aufgabe besteht im wesentlichen darin, die instationären Kupplungszustände einer solchen Kupplung, unabhängig davon, ob diese durch Getriebeschaltungen oder Schlupfregelvorgänge oder durch andere Faktoren ausgelöst werden, so zu steuern, daß die Übergänge zwischen stationärem und instationärem Kupplungszustand hohen Komfortansprüchen genügen, d. h. für den Fahrer unspürbar ablaufen. Diese instationären Kupplungszustände "Öffnen" und "Schließen" treten bei einer lediglich als Überbrückung für den Drehmomentwandler arbeitenden Kupplung beim Wechsel der beiden stationären Kupplungszustände "Kupplung offen" und "Kupplung geschlossen" auf. Bei einer mit einem geregelten Schlupf arbeitenden Kupplung wird ein dritter Kupplungszustand, nämlich derjenige mit Regelung auf konstanten Schlupf, ebenfalls als "stationär" betrachtet, so daß die instationären Kupplungszustände jeweils beim Wechsel zwischen dem dritten stationären Kupplungszustand einerseits und einem der beiden anderen stationären Kupplungszustände andererseits auftreten.

Die erläuterte Aufgabe ist gemäß der Erfindung in vorteilhafter Weise mit den kennzeichnenden Merkmalen von Patentanspruch 1 gelöst.

Bei dem Verfahren nach der Erfindung beeinflussen innerhalb einer elektronischen Getriebesteuerung unterschiedliche Signale den von einer Zeitfunktion bestimmten Verlauf der Stellgröße und bestimmen diesen in jedem Berechnungszyklus neu. Die Auswirkungen dieser Stellgrößenänderungen auf die Kupplung bleiben dabei für den Fahrer unspürbar, d. h. die Übergänge zwischen stationären und instationären Kupplungszuständen finden unter hohem Komfort statt.

Bei einem Anwendungsbeispiel des Verfahrens nach der Erfindung für eine reibschlüssige Kupplung, welche durch ein Kupplungsstellglied der Axialkolbenbauart ein- und ausrückbar ist, wird der als Stellgröße zu betrachtende Arbeitsdruck des Kupplungsstellgliedes durch ein vorgesteuertes Druckregelventil eingestellt, dessen Vorsteuerdruck durch ein von einer elektronischen Steuereinheit gesteuertes elektromagnetisches Vorsteuerventil in der Phase mit von einer Zeitfunktion bestimmtem Verlauf nach der Gleichung

$$P(t) = mp \times t + po$$

ausgesteuert wird, in welcher mp die erste Ableitung des Vorsteuerdruckes p(t) nach der Zeit (im folgenden als Gradient bezeichnet), t die Zeit und po den Ausgangsdruck des vorhergehenden Berechnungszyklus angeben.

Für die Bestimmung des Gradienten mp werden die Änderung der Beschleunigungsvorgabe und die Änderung der Temperatur der Kupplung als fahrzeugspezifische Einflußgrößen berücksichtigt.

Wird eine Fahrzeugbeschleunigung durch Verändern der Fahrpedaleinstellung eingeleitet, so kann der Zustand der Kupplung zeitlich vor der Motormomentenänderung angepaßt werden. Dabei berechnet sich der Gradient des Druckverlaufes in Abhängigkeit von der Änderungsgeschwindigkeit des Beschleunigungswunsches (Drosselklappengeschwindigkeit). Ab einer bestimmten Änderungsgeschwindigkeit des Fahrpedales erfolgt zusätzlich die Anpassung des Gradienten über die eigentliche Betätigungszeit hinaus. Entsprechend einer erfaßten Änderungsgeschwindigkeit der Temperatur der Reibflächen der Kupplung, wobei diese Temperatur beispielsweise empirisch aus einer gemessenen Umgebungstemperatur oder aus einer gemessenen Temperatur eines die Kupplung umspülenden Arbeitsöles eines Drehmomentwandlers oder einer anderen gemessenen und mit der Temperatur der Reibflächen in kausalem Zusammenhang stehenden Temperatur ermittelt wird, kann der Gradient in der Art beeinflußt werden, daß niedrige Änderungsgeschwindigkeiten den Gradienten verkleinern und höhere Änderungsgeschwindigkeiten den Gradienten vergrößern. Bei konstanter Temperatur der Kupplung soll dagegen keine Korrektur des Gradienten erfolgen.

Bei dem Verfahren nach der Erfindung kann somit der durch eine Zeitfunktion bestimmte Verlauf der Stellgröße als charakteristische Phase eines instatinären Kupplungszustandes beispielsweise als Funktion der Änderungsgeschwindigkeiten unterschiedlicher Betriebsparameter bestimmt und in jedem Berechnungszyklus neu angepaßt werden. Der so erstellte Algorithmus könnte als Unterprogramm innerhalb eines Gesamtalgorithmus zur Steuerung einer Kupplung eingesetzt werden, welche zur Überbrückung eines hydrodynamischen Drehmomentwandlers eingesetzt ist und mit Regelung eines Kupplungsschlupfes auf einen vorbestimmten Sollwert arbeitet.

Einzelheiten der Erfindung ergeben sich aus der nachstehenden Beschreibung eines in der Zeichnung schematisch dargestellten Ausführungsbeispieles. In der Zeichnung bedeuten

Fig. 1 ein Blockschaltbild zur Erläuterung der Anwendung des Verfahrens nach der Erfindung zur Steuerung einer Kupplung, welche als Überbrückung eines hydrodynamischen Drehmomentwandlers im Antriebsstrang eines Kraftfahrzeuges angeordnet ist und mit einem geregelten Schlupf arbeitet,

Fig. 2 einen zur Durchführung des Verfahrens nach der Erfindung bei der Kupplung von Fig. 1 vorgesehenen Signalflußplan,

Fig. 3 ein von Betriebsparametern der Brennkraftmaschine des Kraftfahrzeuges abhängiges Kennfeld für den Wechsel der Kupplungszustände der Kupplung von Fig. 1,

Fign. 4 (a)-(c)      drei Zeitdiagramme zur Erläuterung der Abhängigkeiten des Arbeitsdruckes des Kupplungsstellgliedes der Kupplung von Fig. 1 und des Druckgradienten von der zeitlichen Änderung der Stellung des Fahrpedales des Kraftfahrzeuges,

Fign. 5 (a) - (c)     drei Zeitdiagramme zur Darstellung einer Nachlaufphase, die bei dem Verfahren nach der Erfindung einsteuerbar ist, und

Fign. 6 (a)-(c)      drei Zeitdiagramme zur Erläuterung der Abhängigkeiten des Arbeitsdruckes des Kupplungsstellgliedes der Kupplung von Fig. 1 und des Druckgradienten von der zeitlichen Änderung der Temperatur der Kupplung.

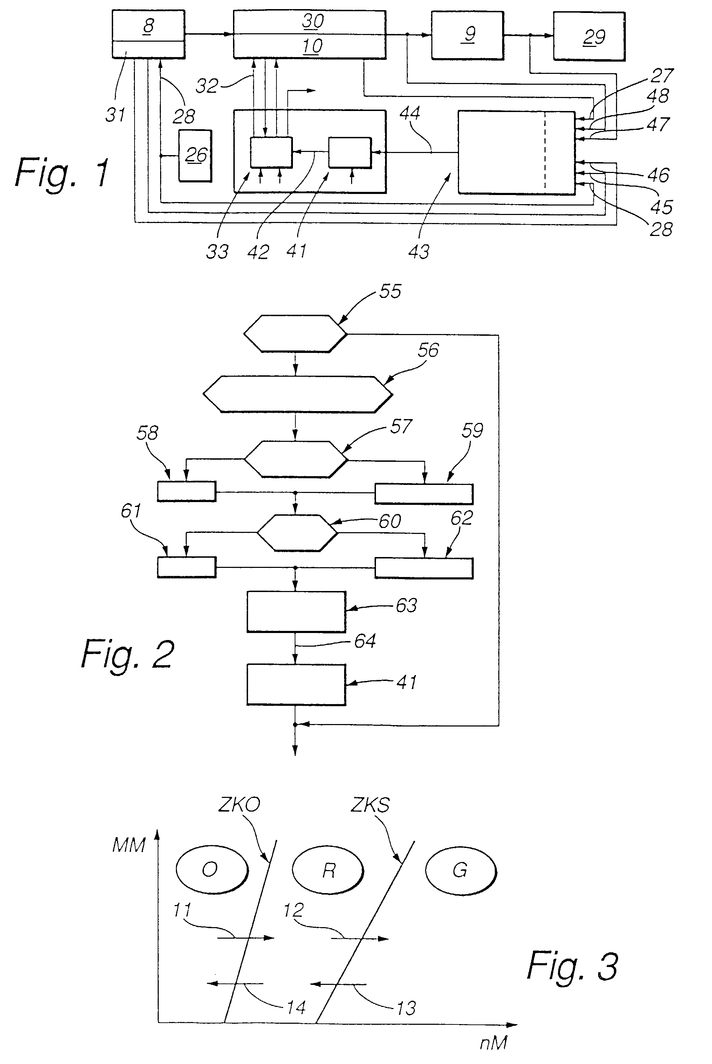

Bei einem nicht näher dargestellten Kraftfahrzeug sind unter Bezugnahme auf Fig. 1 in einem von einer Brennkraftmaschine 8 zu einem Fahrwerk 29 (Antriebsachsen) führenden Drehmomentübertragungsstrang (Antriebsstrang) in der üblichen Reihenanordnung ein hydrodynamischer Drehmomentwandler 30 und ein Wechselgetriebe 9 angeordnet. Der Drehmomentwandler 30 ist in bekannter Weise durch eine Kupplung 10 überbrückbar, welche mit einem geregelten Schlupf zur Abkoppelung von Drehmomentschwingungen vom nachgeordneten Teil des Antriebsstanges arbeitet. Das Wechselgetriebe 9 weist in nicht mehr dargestellter, jedoch bekannter Weise eine selbsttätige Einrichtung zur stufenweisen oder stufenlosen Änderung seiner Getriebeübersetzung auf. Der Brennkraftmaschine 8 ist eine elektronische Steuereinheit 31 zugeordnet, welche die Brennkraftmaschine u. a. in Abhängigkeit von einem Eingangssignal 28 steuert, welches von einer elektronischen Einrichtung 26 ausgegeben wird und von der Stellung des Fahrpedales des Kraftfahrzeuges abhängig ist.

Dem Kupplungsstellglied der Kupplung 10 wird ein Arbeitsdruck über eine Arbeitsdruckleitung 32 zugeführt, welche von einer Druckregelvorrichtung 33 abgeht. Die Druckregelvorrichtung 33 stellt den Arbeitsdruck in der Arbeitsdruckleitung 32 zum Kupplungsstellglied in Abhängigkeit von dem Steuerdruck einer von einem elektromagnetischen Vorsteuerventil 41 abgehenden Steuerdruckleitung 42 ein. Der Steuerteil des Vorsteuerventiles 41 ist mit einem Ausgang einer elektronischen Steuereinheit 43 durch eine elektrische Steuerleitung 44 verbunden. Die elektronische Steuereinheit 43 verarbeitet Eingangssignale, welche von fahrzeugspezifischen Einflußgrößen abhängig sind, also u. a. ein von der Temperatur T der Kupplung 10 mittelbar oder unmittelbar abhängiges Eingangssignal 27, das vom Zustand des Fahrpedales 26 abhängige Eingangssingal 28, ein von der Drehzahl der Brennkraftmaschine 8 - also von der primärseitigen Kupplungsdrehzahl der Kupplung 10 - abhängiges Eingangssignal 45, ein vom Drehmoment der Brennkraftmaschine 8 abhängiges Eingangssignal 46, ein von der Drehzahl der Ausgangswelle des Wechselgetriebes 9 abhängiges Eingangssignal 47 und ein von der Drehzahl der Eingangswelle des Wechselgetriebes 9 - also von der sekundärseitigen Kupplungsdrehzahl der Kupplung 10 - abhängiges Eingangssignal 48.

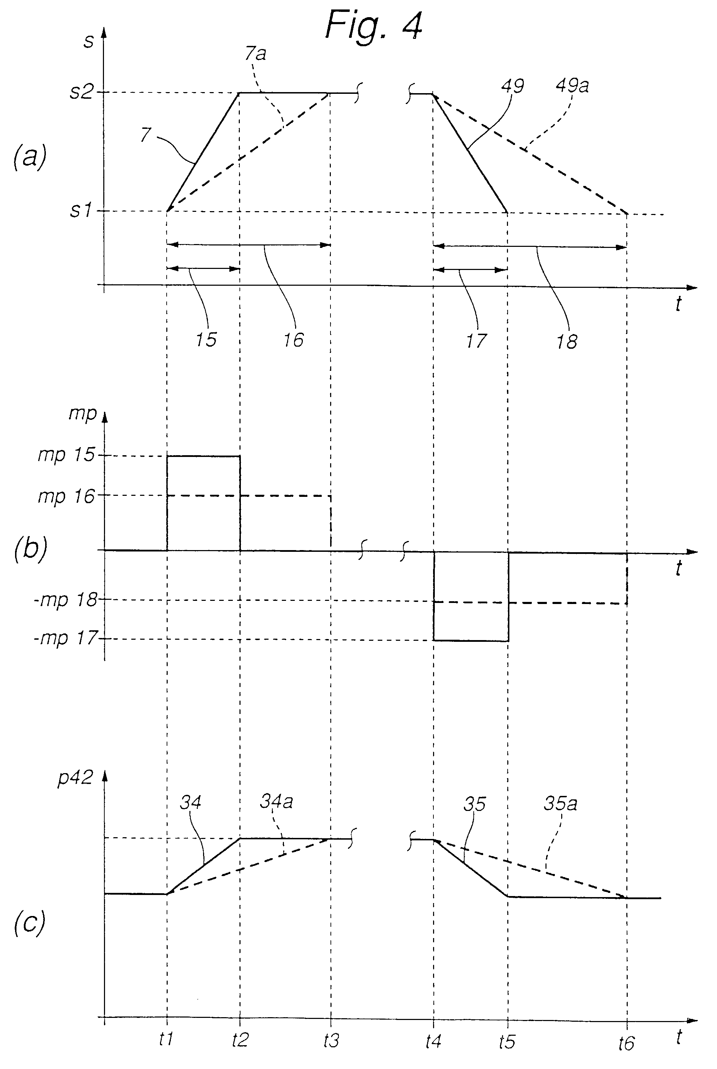

Die elektronische Steuereinheit 43 steuert die Kupplung 10 nach dem Kennfeld der Fig. 3 und den Kennlinien der Fign. 4(c), 5(c) und 6(c).

Bei dem Kennfeld der Fig. 3 sind auf der Abszissen-Achse die Drehzahl nM und auf der Ordinaten-Achse das Drehmoment MM jeweils der Brennkraftmaschine 8 aufgetragen. Für das Kennfeld der Fig. 3 sind zwei Zustandskennlinien ZKO und ZKS kennzeichnend, welche einen im mittleren Drehzahlbereich liegenden stationären Kupplungszustand R - in welchem die Steuereinheit 43 nach einem der bekannten Schlupfregelalgorithmen einen konstanten Schlupf in der Kupplung 10 einregelt - einerseits gegenüber einem im unteren Drehzahlbereich liegenden stationären Kupplungszustand O - in welchem die Kupplung 10 vollständig offen, also ausgerückt ist - und andererseits gegenüber einem im oberen Drehzahlbereich liegenden stationären Kupplungszustand G - in welchem die Kupplung 10 vollständig geschlossen, also eingerückt ist - abgrenzen.

Wenn sich der Motorbetriebspunkt vom stationären Kupplungszustand O aus in Richtung höherer Drehzahlen verlagert, werden beim "Überfahren" der Zustandskennlinien ZKO und ZKS jeweils ein instationärer Kupplungszustand 11 bzw. 12 ausgelöst, bei welchem die Kupplung 10 im Sinne "Schließen" betätigt wird. Wenn sich der Motorbetriebspunkt vom stationären Kupplungszustand G aus in Richtung niedriger Drehzahlen verlagert, werden beim "Überfahren" der Zustandskennlinien ZKS und ZKO jeweils ein instationärer Kupplungszustand 13 bzw. 14 ausgelöst, in welchem die Kupplung 10 im Sinne "Öffnen" betätigt wird.

Diese instationären Kupplungszustände 11 bis 14 sind jedoch von der elektronischen Steuereinheit 43 auch dann auslösbar, wenn der Fahrzustand zwischen "Zugbetrieb" und "Schiebebetrieb" wechselt, wobei der Schiebebetrieb von der Steuereinheit 43 dadurch erkannt werden kann, daß das Fahrpedal 26 nicht betätigt und die Drehzahl der Brennkraftmaschine 8 höher als die Leerlaufdrehzahl ist, oder dadurch, daß das Motormoment und somit das Eingangssignal 46 negativ wird.

Wenn sich die Übersetzung des Wechselgetriebes 9 ändert, können die instationären Kupplungszustände 11 bis 14 ebenfalls von der Steuereinheit 43 ausgelöst werden.

Das Verfahren nach der Erfindung zur Steuerung des Steuerdruckes p42 in der Steuerdruckleitung 42 durch die Steuereinheit 43 gemäß den Fign. 2 und 4 bis 6 bezieht sich ausschließlich auf jeweils einen der instationären Kupplungszustände 11 bis 14 und ausschließlich auf eine solche Phase dieses Zustandes, welche durch eine zeitliche Änderung der Fahrpedalstellung oder durch eine zeitliche Änderung der Temperatur der Kupplung oder durch beide dieser Bedingungen ausgelöst und durch einen von einer Zeitfunktion bestimmten Verlauf des Steuerdruckes p42 gekennzeichnet sein soll. Zu diesem Zweck steuert die elektronische Steuereinheit 43 eine zeitgesteuerte Druckvorgabe für das Magnetventil 41 in Form eines Stromsignales in der Leitung 44 aus, wobei in der Steuereinheit 43 die Zeitfunktion beispielsweise als erste Ableitung des Druckes nach der Zeit, der sogenannte Gradient, in Abhängigkeit von Fahrpedalbetätigung und Kupplungstemperatur vorgegeben wird.

Diese Abhängigkeit des Gradienten ist in den Figuren 4 bis 6 dargestellt.

Unter Bezugnahme auf Fig. 4 sind im Diagramm 4(a) der Fahrpedalweg s über der Zeit t, im Diagramm 4(b) der Gradient mp über der Zeit t und im Diagramm 4(c) der Vorsteuerdruck p42 der Steuerdruckleitung 42 über der Zeit t aufgetragen.

Es sei angenommen, daß ein instationärer Kupplungszustand - beispielsweise der Kupplungszustand 11 in Fig. 3 - ausgelöst und hierbei eine mittlere Fahrpedalgeschwindigkeit (s2 - s1): (t2 - t1) gemäß dem Kurvenverlauf 7 in Fig. 4(a) erfaßt wird. Dieser Fahrpedalgeschwindigkeit 7 ist gemäß Fig. 4(b) ein mittlerer Wert mp 15 des Gradienten zugeordnet, so daß die Steuereinheit 43 eine Gradientenphase 15 = t1 - t2 mit einem mittleren steilen Anstieg 34 des Steuerdruckes p42 gemäß Fig. 4(c) aussteuert.

Ist die im instationären Kupplungszustand 11 der Fig. 3 erfaßte Fahrpedalgeschwindigkeit (s2 - s1): (t3 - t2) jedoch entsprechend dem Kurvenverlauf 7a von Fig. 4(a) niedriger, so steuert die elektronische Steuereinheit 43 eine Gradientenphase 16 mit einem flacheren Anstieg 34a (Fig. 4(c)) des Steuerdruckes p42 aus, weil der niedrigeren Fahrpedalgeschwindigkeit gemäß Fig. 4(b) ein entsprechend niedrigerer Wert mp 16 des Gradienten zugeordnet ist.

Während in den beiden vorstehend beschriebenen instationären Kupplungszuständen das Fahrpedal jeweils im Sinne einer Leistungserhöhung durchgetreten wurde, sei nunmehr ein instationärer Kupplungszustand - bspw. der Kupplungszustand 14 in Fig. 3-angenommen, bei welchem das Fahrpedal in Richtung seiner Ruhestellung zurückgenommen und dabei gemäß Fig. 4(a) eine mittlere Fahrpedalgeschwindigkeit (s1 - s2):(t5 - t4) nach dem Kurvenverlauf 49 erfaßt wird. Dieser mittleren Fahrpedalgeschwindigkeit 49 ist gemäß Fig. 4(b) ein mittlerer negativer Wert - mp17 des Gradienten mp zugeordnet, so daß die elektronische Steuereinheit 43 eine Gradientenphase 17 = t4 - t5 mit einem mittelsteil abfallenden Verlauf 35 des Steuerdruckes p42 aussteuert.

Liegt die im instationären Kupplungszustand 14 erfaßte Fahrpedalgeschwindigkeit (s1 - s2):(t6 - t5) jedoch entsprechend dem Kurvenverlauf 49a in Fig. 4(a) niedrigerer, steuert die elektronische Steuereinheit 43 eine Gradientenphase 18 = t5-t6 mit einem weniger steil abfallenden Verlauf 35a gemäß Fig. 4(c) aus, weil der niedrigeren Fahrpedalgeschwindigkeit ein niedrigerer negativer Gradientenwert - mp18 gemäß Fig. 4(b) zugeordnet ist.

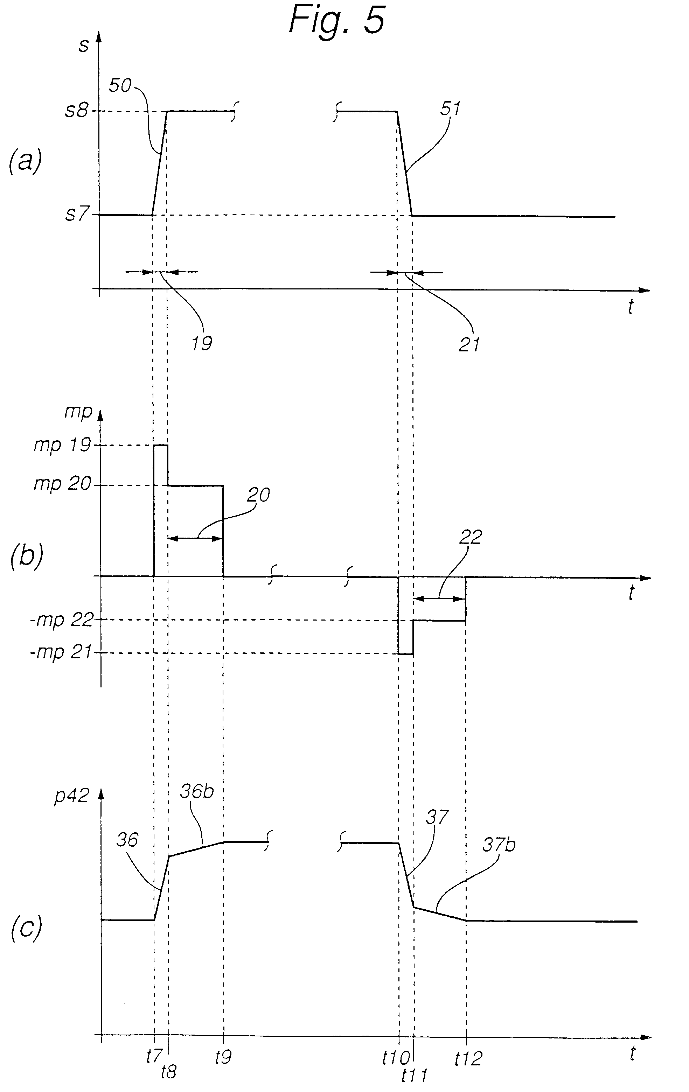

Wenn während eines instabilen Kupplungszustandes - bspw. während des Kupplungszustandes 12 von Fig. 3 - eine hohe Fahrpedalgeschwindigkeit (s8 - s7):(t8 - t7) nach dem Kurvenverlauf 50 von Fig. 5(a) erfaßt wird, welcher gemäß Fig. 5(b) ein hoher Wert mp19 des Gradienten mp zugeordnet ist, steuert die elektronische Steuereinheit 43 sowohl eine Gradientenphase 19 = t7 - t8 mit einem entsprechend steilen Anstieg 36 des Steuerdruckes p42 nach Fig. 4(c) sowie eine sich anschließende Nachlaufphase 20 mit einem weniger steilen Anstieg 36b des Steuerdruckes p42 aus, wobei die Nachlaufphase 20 = t8 - t9 sich über den Zeitpunkt t8, zu welchem die Fahrpedalwegänderung δs zu Null geworden ist, hinaus erstreckt. Hierbei ist der Wert mp20 des Gradienten der Nachlaufphase 20 von dem Wert mp19 der Gradientenphase 19 abhängig.

Eine entsprechende Abhängigkeit des Gradienten von der Fahrpedalwegänderung ist auch für negative hohe Fahrpedalgeschwindigkeiten vorgegeben. So sei ein instationärer Kupplungszustand - bspw. der instationäre Kupplungszustand 13 von Fig. 3 - angenommen, bei welchem eine negative Fahrpedalgeschwindigkeit (s7-s8):(t11 - t10) nach dem Kurvenverlauf 51 von Fig. 5(a) erfaßt wird. Dieser hohen negativen Fahrpedalgeschwindigkeit ist ein hoher negativer Wert - mp21 des Druckgradienten gemäß Fig. 5(b) zugeordnet, so daß die elektronische Steuereinheit 43 eine Gradientenphase 21 = t10 - t11 mit einem entsprechend steil abfallenden Verlauf 37 des Steuerdruckes p42 sowie eine sich anschließende Nachlaufphase 22 = t11 - t12 mit einem weniger steil abfallenden Verlauf 37b des Steuerdruckes p42 gemäß Fig. 5(c) aussteuert, wobei die Nachlaufphase 22 zu demjenigen Zeitpunkt t11 beginnt, in welchem die Fahrpedaländerung gemäß Fig. 5(a) zu Null geworden ist. Der etwas niedrigere Wert - mp22 des Gradienten der Nachlaufphase 22 ist wiederum durch den hohen Wert -mp21 der zeitlich vorangegangenen Gradientenphase 21 bestimmt.

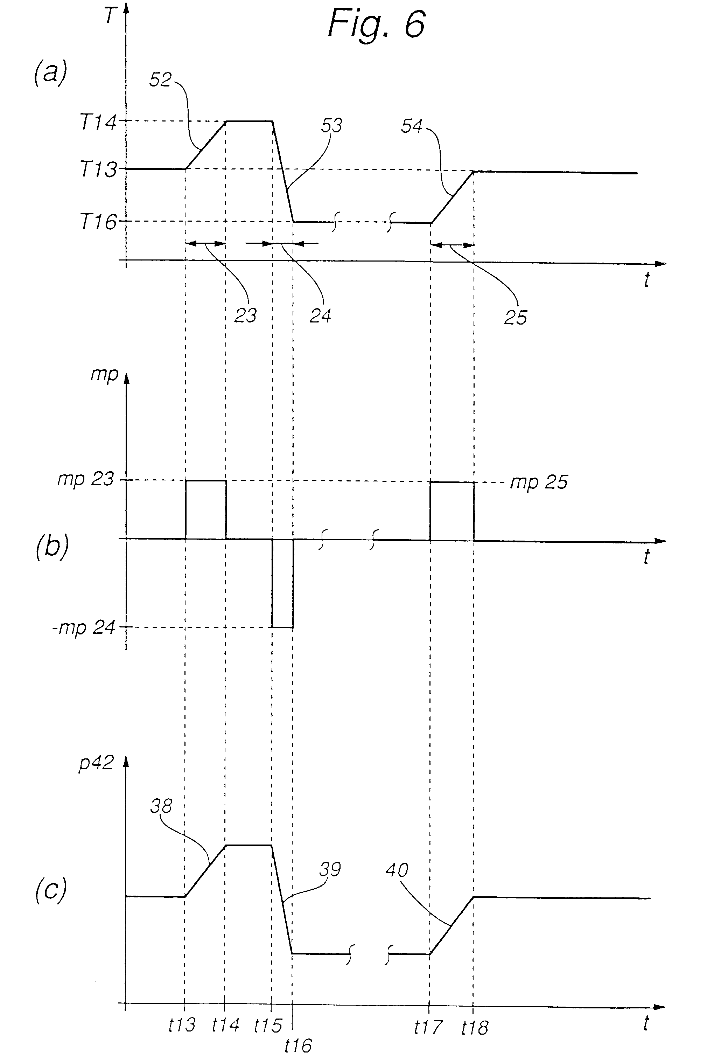

Wenn während eines instationären Kupplungszustandes die Temperatur T der Kupplung 10 sich schnell ändert, bspw. mit einer Geschwindigkeit (T14 - T14) : (t14 - t13) nach dem Kurvenverlauf 52 von Fig. 6(a) ansteigt, dann steuert die elektronische Steuereinheit (43) eine Gradientenphase 23 = t13 - t14 mit einem steilen Anstieg 38 des Steuerdruckes p42 gemäß Fig. 6(c) aus, weil der hohen Änderungsgeschwindigkeit 52 ein hoher Wert mp23 des Druckgradienten mp zugeordnet ist.

Wenn während eines instationären Kupplungszustandes die Temperatur T der Kupplung 10 schnell abfällt, bspw. mit einer Geschwindigkeit (T16 - T14) : (t16 - t15) nach dem Kurvenverlauf 53 von Fig. 6(a), dann steuert die elektronische Steuereinheit 43 eine Gradientenphase 24 = t15 - t16 mit einem steilen Abfall 39 des Steuerdruckes p42 gemäß Fig. 6(c) aus, weil der hohen negativen Änderungsgeschwindigkeit 53 ein hoher negativer Wert - mp24 des Druckgradienten gemäß Fig. 6(b) zugeordnet ist.

Wenn während eines instationären Kupplungszustandes die Temperatur T der Kupplung 10 in einem anderen Temperaturbereich T13-T16 mit der gleichen Geschwindigkeit wie im Temperaturbereich T13 - T14 ansteigt, wie dies in Fig. 6(a) mit dem Kurvenverlauf 54 zwischen den Zeitpunkten t17 und t18 und mit dem Kurvenverlauf 52 zwischen den Zeitpunkten t13 und t14 angedeutet ist, dann steuert die elektronische Steuereinheit 43 - weil gemäß Fig. 6(b) für gleiche Geschwindigkeiten 52 = 54 der gleiche Gradientenwert mp23 = mp25 vorgegeben ist - eine Gradientenphase 25 = t17 - t18 aus, in welcher der Druckanstieg 40 des Steuerdruckes p42 gleich dem Druckanstieg 38 in der vergleichbaren Gradientenphase 23 ist.

Unter Bezugnahme auf Fig. 2 arbeitet die elektronische Steuereinheit 43 so, daß in einem ersten Auswerteschritt 55 ermittelt wird, ob ein instationärer Kupplungszustand vorliegt. Wenn dies der Fall ist, wird ein Unterprogramm 56 "Gradientensteuerung" angestoßen, nach welchem in einem Auswerte-Schritt 57 geprüft wird, ob das Fahrpedal schnell betätigt wird. Ist dies nicht der Fall, wird ein fahrpedalabhängiger Anteilsfaktor mp_1 des Druckgradienten in einer Rechenoperation 58 zu 1.0 bestimmt. Wird jedoch eine schnelle Fahrpedaländerung erfaßt, wird in einer Rechenoperation 59 der fahrpedalabhängige Anteilsfaktor mp_1 in Abhängigkeit von der Fahrpedalgeschwindigkeit bestimmt: $mp\_1 = f(\delta s/\delta t)$.

Das Unterprogramm 56 schließt einen weiteren Auswerte-Schritt 60 ein, in welchem geprüft wird, ob in dem vorliegenden instationären Kupplungszustand eine Temperaturänderung an der Kupplung auftritt. Ist dies nicht der Fall, wird in einer Rechenoperation 61 ein temperaturabhängiger Anteilsfaktor mp_2 des Druckgradienten zu 1.0 bestimmt. Wird jedoch eine Temperaturänderung erkannt, wird in einer Rechenoperation 62 der temperaturabhängige Anteilsfaktor mp_2 in Abhängigkeit von der Änderungsgeschwindigkeit der Temperatur T festgelegt: $mp\_2 = f(\delta T/\delta t)$.

In einem sich anschließenden Rechenschritt 63 wird aus den Anteilsfaktoren mp_1 und mp_2 der aktuelle Druckgradient mp errechnet: $mp = (mp\_1) \times (mp\_2)$.

Mit einem dem aktuellen Druckgradienten mp entsprechenden Signal 64 am Ausgang 44 der Steuereinheit 43 wird schließlich das elektromagnetische Vorsteuerventil 41 beaufschlagt, welches den Steuerdruck $p42 = (mp) \times (\delta t) + p0$ aussteuert.

## Patentansprüche

1. Anordnung zum Steuern einer die Drehzahldifferenz einer im Kraftfluß zwischen einer Brennkraftmaschine (8) und einem Wechselgetriebe (9) eines Kraftfahrzeuges liegenden Kupplung (10) bestimmenden Stellgröße, mit einer von fahrzeugspezifischen Einflußgrößen abhängige Eingangssignale (27, 28, 45, 46, 47, 48) zusammen mit festgelegten Sollwert-Kennlinien verarbeitenden elektronischen Steuereinheit (43), welche Sollwerte in Form von Ausgangssignalen zur Beaufschlagung eines die Stellgröße einstellenden Stellgliedes ausgibt, mit einer Einrichtung zur Erfassung einer von der Geschwindigkeit des Fahrpedales (26) abhängigen Einflußgröße (28), wobei während eines instationären Kupplungszustandes eine Phase mit einem von einer vorgegebenen Zeitfunktion bestimmten Verlauf der Stellgröße einsteuerbar ist und Beginn und Ende sowohl des instationären Kupplungszustandes als auch der Phase jeweils in Abhängigkeit von fahrzeugspezifischen Einflußgrößen festgelegt sind,
   **dadurch gekennzeichnet,** daß die Anordnung eine Einrichtung zur Erfassung einer von der Temperatur der Kupplung abhängigen Einflußgröße (27), umfaßt,
   daß eine Einrichtung zur Erfassung einer von der Änderungsgeschwindigkeit (dT/dt) der Temperatur (T) der Kupplung (10) abhängigen Einflußgröße (27) verwendet ist, und daß eine oder beide Einflußgrößen (27 u. 28) - von denen die eine von der Änderungsgeschwindigkeit (dT/dt) der Temperatur (T) der Kupplung (10) und die andere von der Geschwindigkeit (ds/dt) des Fahrpedales (26) abhängig ist - sowohl ausschließlich zur Festlegung von Beginn und Ende der Phase (15 bis 25) als auch zusätzlich zur Festlegung des von einer vorgegebenen Zeitfunktion bestimmten Verlaufes (34,34a; 35,35a; 36,36b; 37,37b; 38 bis 40) der Stellgröße (p42) verwendet ist oder sind.

2. Anordnung nach Anspruch 1,
   **dadurch gekennzeichnet,**
   daß das Ende einer Phase (19 oder 21) mit von einer vorgegebenen Zeitfunktion bestimmten Verlauf (36 oder 37) durch denjenigen Zeitpunkt (t8 oder t11) festgelegt ist, in welchem die Fahrgeschwindigkeit (ds/dt) einen unteren skalaren Grenzwert erreicht, und daß in diesem Zeitpunkt eine Nachlaufphase (20 oder 22) mit von einer vorgegebenen Zeitfunktion bestimmten Verlauf (36b oder 37b) der Stellgröße einsteuerbar ist, wenn die Fahrpedalgeschwindigkeit (ds/dt) in der vor diesem Zeitpunkt (t8 oder t11) liegenden Phase (19 oder 21) einen vorbestimmten oberen skalaren Grenzwert überschritten hatte.

3. Anordnung nach Anspruch 2,

**dadurch gekennzeichnet,**
daß ein von einer vorgegebenen Zeitfunktion bestimmter Verlauf (36b oder 37b) in einer Nachlaufphase (20 oder 22) von der Fahrpedalgeschwindigkeit (ds/dt) abhängig ist.

4.   Anordnung nach einem der Ansprüche 1 bis 3,
     **dadurch gekennzeichnet,**
     daß die die instationären Kupplungszustände (11 bis 14) festlegenden Einflußgrößen den Lastwechsel zwischen Zug- und Schubbetrieb einschließen.

5.   Anordnung nach einem der Ansprüche 1 bis 4,
     **dadurch gekennzeichnet,**
     daß die die instationären Kupplungszustände (11 bis 14) festlegenden Einflußgrößen ein von Motorbetriebsgrößen abhängiges Kennfeld (Figur 3) für den Wechsel der Kupplungszustände (11 bis 14) einschließen.

6.   Anordnung nach einem der Ansprüche 1 bis 5,
     **dadurch gekennzeichnet,**
     daß die die instationären Kupplungszustände (11 bis 14) festlegenden Einflußgrößen Übersetzungsänderungen des Wechselgetriebes (9) einschließen.

## Claims

1.   Arrangement for controlling a regulating variable which determines the rotational speed difference of a clutch (10) located in the force path between an internal combustion engine (8) and a change-speed gearbox (9) of a motor vehicle, having an electronic control unit (43) which processes input signals (27, 28, 45, 46, 47, 48) dependent on influencing variables specific to the vehicle together with fixed required value characteristics and which emits required values in the form of output signals for action on an actuation element adjusting the regulating variable, having a device for recording an influencing variable (28) dependent on the speed of the accelerator pedal (26), it being possible during a transient clutch condition to select a phase with a variation, determined by a specified time function, of the regulating variable and the beginning and the end of both the transient clutch condition and the phase being respectively fixed as a function of influencing variables specific to the vehicle, characterized in that the arrangement comprises a device for recording an influencing variable (27) dependent on the temperature of the clutch, in that a device is used for recording an influencing variable (27) dependent on the rate of change (dT/dt) of the temperature (T) of the clutch (10) and in that one or both influencing variables (27 and 28) - of which one depends on the rate of change (dT/dt) of the temperature (T) of the clutch (10) and the other depends on the speed (ds/dt) of the accelerator pedal (26) - is or are used both to fix, exclusively, the beginning and end of the phase (15 to 25) and, additionally, to fix the curve (34, 34a; 35, 35a; 36, 36b; 37, 37b; 38 to 40), determined by a specified time function, of the regulating variable (p42).

2.   Arrangement according to Claim 1, characterized in that the end of a phase (19 or 21) with a curve (36 or 37) determined by a specified time function is fixed by that instant (t8 or t11) at which the accelerator pedal speed (ds/dt) reaches a lower scalar limiting value and in that a follow-up phase (20 or 22) with a curve (36b or 37b), determined by a specified time function, of the regulating variable can be selected at this instant if the accelerator pedal speed (ds/dt) in the phase (19 or 21) located before this instant (t8 or t11) had exceeded a predetermined upper scalar limiting value.

3.   Arrangement according to Claim 2, characterized in that a curve (36b or 37b), determined by a specified time function, in a follow-up phase (20 or 22) depends on the accelerator pedal speed (ds/dt).

4.   Arrangement according to one of Claims 1 to 3, characterized in that the influencing variables fixing the transient clutch conditions (11 to 14) include the load change between driving operation and overrun operation.

5.   Arrangement according to one of Claims 1 to 4, characterized in that the influencing variables fixing the transient clutch conditions (11 to 14) include a characteristic diagram (Fig. 3), dependent on engine operating parameters, for the change in the clutch conditions (11 to 14).

6.   Arrangement according to one of Claims 1 to 5, characterized in that the influencing variables fixing the transient clutch conditions (11 to 14) include changes in the transmission ratio of the change-speed gearbox (9).

# EP 0 651 182 B1

**Revendications**

1. Dispositif pour commander une grandeur de réglage, qui détermine la différence de vitesse de rotation d'un embrayage (10) situé dans le flux de force entre un moteur à combustion interne (8) et une transmission (9) d'un véhicule automobile, comportant une unité de commande électronique (43), qui traite des signaux d'entrée (27, 28, 45, 46, 47, 48), qui dépendent de paramètres spécifiques au véhicule, ainsi que des courbes caractéristiques fixées de valeurs de consigne et qui délivre des valeurs de consigne sous la forme de signaux de sortie destinés à charger un organe de réglage réglant la grandeur de réglage, et comportant un dispositif pour détecter un paramètre (28) qui dépend de la vitesse de la pédale d'accélérateur (26), et dans lequel pendant un état transitoire de l'embrayage, une phase avec une variation de la grandeur de réglage, qui est déterminée par une fonction temporelle prédéterminée, peut être commandée et le début et la fin aussi bien de l'état transitoire de l'embrayage que de la phase sont fixés respectivement en fonction de paramètres spécifiques au véhicule, caractérisé en ce que le dispositif comprend un dispositif servant à détecter un paramètre (27) qui dépend de la température de l'embrayage, et qu'on utilise un dispositif servant à détecter un paramètre (27) qui dépend de la vitesse de variation (dT/dt) de la température (T) de l'embrayage (10), et qu'un paramètre ou les deux paramètres (27 et 28) - dont l'un dépend de la vitesse de variation (dT/dt) de la température (T) de l'embrayage (10) et l'autre dépend de la vitesse (ds/dt) de la pédale d'accélérateur (26) - est ou sont utilisés aussi bien exclusivement pour déterminer le début et la fin de la phase (15 à 25) que pour déterminer en outre la variation (34, 34a ; 35, 35a ; 36, 36b ; 37, 37b ; 38 à 40) du paramètre (p42), définie par une fonction temporelle prédéterminée.

2. Dispositif selon la revendication 1, caractérisé en ce que la fin d'une phase (19 ou 21) est fixée avec une variation (36 ou 37) déterminée par une fonction temporelle prédéterminée, par l'instant (t8 ou t11), auquel la vitesse de déplacement (ds/dt) atteint une valeur limite scalaire inférieure, et qu'une phase de marche asservie (20 ou 22) peut être commandée à cet instant avec une variation (36b ou 37b), déterminée par une fonction temporelle prédéterminée, du paramètre lorsque la vitesse (ds/dt) de la pédale d'accélérateur a dépassé, pendant la phase (19 ou 21) située avant cet instant (t8 ou t11), une valeur scalaire limite supérieure prédéterminée.

3. Dispositif selon la revendication 2, caractérisé en ce qu'une variation (36b ou 37b) déterminée par une fonction temporelle prédéterminée dépend, pendant une phase de marche asservie (20 ou 22), de la vitesse (ds/dt) de la pédale d'accélérateur.

4. Dispositif selon l'une des revendications 1 à 3, caractérisé en ce que les paramètres, qui fixent les états transitoires (11 à 14) de l'embrayage, incluent l'alternance de charge entre le fonctionnement en traction et le fonctionnement en poussée.

5. Dispositif selon l'une des revendications 1 à 4, caractérisé en ce que les paramètres, qui fixent les états transitoires d'embrayage (11 à 14), incluent un champ de caractéristiques (figure 3), qui dépend de grandeurs de fonctionnement du moteur, pour l'alternance des états (11 à 14) de l'embrayage.

6. Dispositif selon l'une des revendications 1 à 5, caractérisé en ce que les paramètres, qui fixent les états transitoires de l'embrayage (11 à 14), incluent des modifications de démultiplication de la transmission (9).

*Fig. 1*

*Fig. 2*

*Fig. 3*

# Fig. 4

# Fig. 5

## Fig. 6